# FASCICULE DE BREVET EUROPEEN

(11) **EP 3 824 205 B1**
(45) Date de publication et mention de la délivrance du brevet: **30.08.2023**
(21) Numéro de dépôt: 19748590.7
(22) Date de dépôt: 10.07.2019
(51) Int. Cl.: F16H 61/4139

(54) **CIRCUIT D'ASSISTANCE HYDRAULIQUE COMPRENANT DES MOYENS DE GAVAGE AMELIORES**
SCHALTUNG FÜR HYDRAULISCHE UNTERSTÜTZUNG MIT VERBESSERTEN ZUFÜHRMITTELN
HYDRAULIC ASSISTANCE CIRCUIT COMPRISING IMPROVED FEEDING MEANS

(30) Priorité: 16.07.2018 FR 1856552
(43) Date de publication de la demande: 26.05.2021
(73) Titulaire: Poclain Hydraulics Industrie, 60410 Verberie (FR)
(72) Inventeur: SCHUBERT, Christian, 60410 VERBERIE (FR); HASENAU, Johannes, 60410 VERBERIE (FR); DEPIERRE, Géry, 60410 VERBERIE (FR)
(74) Mandataire: Cabinet Beau de Loménie
(86) Numéro de dépôt international: PCT/FR2019/051737
(87) Numéro de publication internationale: WO 2020/016505

(56) Documents cités:
- EP-A1- 0 993 982
- DE-A1-102010 010 472
- DE-A1-102016 218 150
- FR-A1- 3 033 529
- US-A1- 2005 193 733
- US-A1- 2013 280 111

## Description

### DOMAINE DE L'INVENTION

Le présent exposé concerne les transmissions hydrauliques, notamment dans le cas d'un système d'assistance hydraulique pour un véhicule.

### ETAT DE LA TECHNIQUE ANTERIEURE

Les systèmes d'assistance hydraulique sont communément utilisés pour certains types de véhicule, notamment les véhicules destinés à recevoir un attelage ou une remorque, ou encore les véhicules présentent différents modes d'entraînement.

Pour de tels systèmes, un moteur principal du véhicule, typiquement un moteur thermique, entraine sélectivement une pompe hydraulique permettant ainsi d'enclencher une assistance hydraulique lorsque nécessaire.

De tels système nécessitent une alimentation en huile permanente via une pompe de gavage, à la fois lorsque l'assistance hydraulique est désengagée pour assurer les fonctions de lubrification, refroidissement, mise en pression des carters et fourniture d'une pression de pilotage, et également lorsque l'assistance hydraulique est activée afin d'assurer une fonction de gavage du circuit d'assistance hydraulique.

Ces différentes fonctions réalisées par la pompe de gavage impliquent que cette dernière soit typiquement calibrée de manière à pouvoir répondre aux exigences du système lorsque l'assistance hydraulique est activée. La pompe de gavage est ainsi typiquement surdimensionnée lorsque l'assistance hydraulique n'est pas activée, ce qui entraine une consommation de puissance inutile. Les documents DE102010010472 et US2013/280111A présentent de tels circuits.

Le présent exposé vise ainsi à répondre au moins partiellement à ces problématiques.

### PRESENTATION DE L'INVENTION

A cet effet, le présent exposé concerne une transmission hydraulique comprenant :
- une pompe hydraulique reliée à au moins un moteur hydraulique via un circuit d'assistance hydraulique,
- un moteur primaire associé à un embrayage de manière à réaliser un entrainement en rotation de la pompe hydraulique via l'embrayage lorsque l'embrayage est engagé, et de manière à découpler la pompe hydraulique du moteur primaire lorsque l'embrayage est désengagé,
- la transmission hydraulique étant caractérisée en ce qu'elle comprend une pompe de gavage d'assistance, configurée de manière à être entraînée en rotation par le moteur primaire lorsque l'embrayage est engagé, et à être découplée du moteur primaire lorsque l'embrayage est désengagé.

Selon un exemple, la transmission hydraulique comprend en outre une boite de vitesse interposée entre le moteur primaire et l'embrayage.

La pompe de gavage d'assistance est alors typiquement reliée au circuit d'assistance hydraulique via un circuit d'orientation, configuré de manière à ce que le débit injecté par la pompe de gavage d'assistance dans le circuit d'assistance hydraulique soit indépendant du sens d'entrainement de la pompe de gavage d'assistance, typiquement par le moteur primaire via la boite de vitesse.

Le circuit d'orientation comprend typiquement une branche primaire et une branche secondaire reliées respectivement à une admission et à un refoulement de la pompe de gavage d'assistance en considérant un fonctionnement selon un sens d'entraînement, la branche primaire et la branche secondaire sont chacune reliées au circuit d'assistance hydraulique via un clapet anti retour permettant un passage de fluide depuis la pompe de gavage d'assistance vers le circuit d'assistance hydraulique, et la branche primaire et la branche secondaire sont chacune reliées à un réservoir via un clapet anti retour permettant un passage de fluide depuis le réservoir vers la pompe de gavage d'assistance.

La transmission comprend en outre une pompe de gavage de veille, configurée de manière à pouvoir être actionnée indépendamment de la pompe de gavage d'assistance.

Ladite la pompe de gavage de veille est par exemple configurée de manière à être entraînée en rotation par le moteur primaire, ou est couplée à un moteur électrique indépendant du moteur primaire.

Selon un exemple, la pompe de gavage de veille délivre un débit proportionnel au débit délivré par la pompe de gavage d'assistance.

La pompe de gavage de veille est typiquement configurée de manière à réaliser un pilotage de l'embrayage via une commande hydraulique.

Selon un exemple, le moteur hydraulique comprend un bloc cylindres présentant une pluralité de logements dans lesquels coulissent des pistons, et une came multilobes positionnée autour du bloc cylindres, lesdits pistons étant configurés pour venir au contact de la came multilobes, et la pompe de gavage de veille est configurée de manière à délivrer une pression dans un carter du moteur hydraulique, de manière à rétracter des pistons du moteur hydrauliques dans leurs logements respectifs et les désengager de la came multilobes

Selon un exemple, la transmission hydraulique comprend en outre un distributeur de purge configuré pour sélectivement alterner entre 3 configurations :
- une première configuration dans laquelle le distributeur de purge relie une admission et un refoulement de la pompe hydraulique d'assistance à un réservoir à pression ambiante,
- une deuxième configuration dans laquelle le distributeur de purge relie l'admission de la pompe hydraulique d'assistance à son refoulement.

Le présent exposé concerne également un véhicule comprenant une transmission hydraulique telle que définie précédemment.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- les figures 1 et 2 présentent deux exemples de transmission hydraulique selon un aspect du présent exposé,
- la figure 3 présente une variante de la transmission hydraulique représentée sur la figure 1.

Sur l'ensemble des figures, les éléments en commun sont repérés par des références numériques identiques.

### DESCRIPTION DETAILLEE D'EXEMPLES DE REALISATION

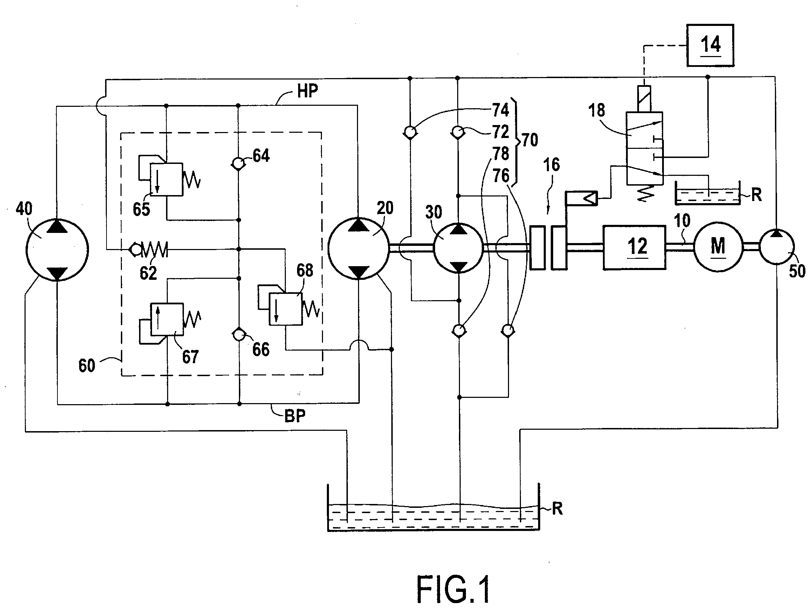

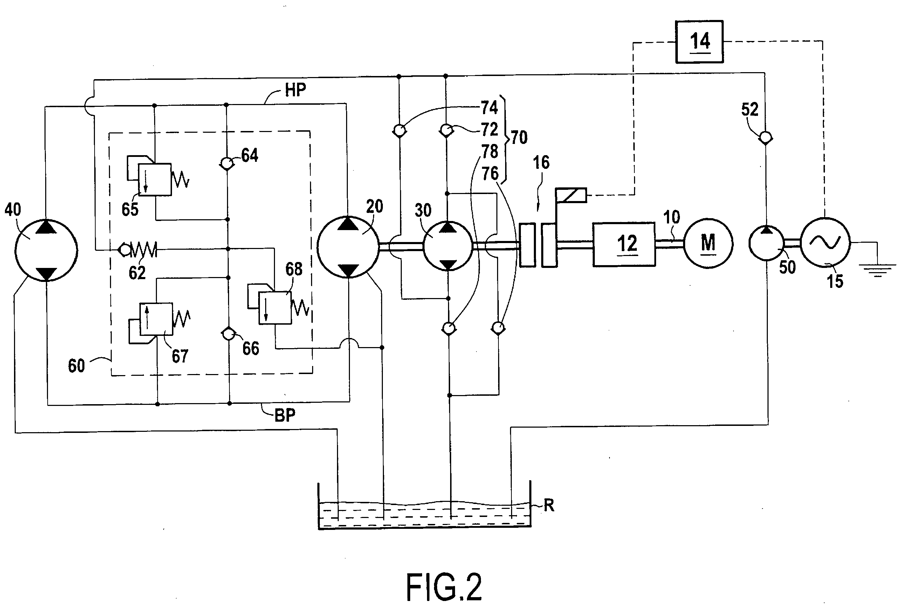

Les figures 1 et 2 représentent deux exemples de transmission hydraulique pour véhicule selon un aspect de l'invention.

On représente sur cette figure un moteur primaire M configuré de manière à entraîner en rotation un arbre moteur 10.

Le moteur M entraine une boite de vitesse du véhicule qui fait partie de la transmission mécanique habituelle du véhicule jusqu'aux roues motrices via par exemple un arbre de transmission un essieu et un différentiel.

En parallèle on prévoit une transmission hydraulique débrayable temporaire sur des roues non motrices, ou roues porteuses, qui permet d'augmenter le nombre de roues motrices lorsque cela est nécessaire, par exemple sur un terrain glissant. La transmission hydraulique représentée sur la figure 1 peut par exemple remplir cette fonction. Pour un véhicule sur route habituelle, la partie hydraulique doit être débrayée pour économiser l'énergie. Cette transmission hydraulique temporaire est appelée assistance à la traction.

Une pompe hydraulique 20 d'assistance et une pompe de gavage d'assistance 30 sont positionnées de manière à être sélectivement entraînées en rotation par le moteur primaire M.

Dans l'exemple illustré, une boite de vitesse 12 est couplée à l'arbre moteur 10, de manière à permettre de moduler la vitesse de rotation vers les roues motrices du véhicule et le couple délivré par le moteur primaire M et transmis notamment à la pompe hydraulique 20 d'assistance et à la pompe de gavage d'assistance 30. La boite de vitesse 12 présente aussi une sortie d'entrainement vers la pompe hydraulique 20 d'assistance et vers la pompe de gavage d'assistance 30. D'une manière générale, soit la boite de vitesse 12 comporte une sortie spécifique d'entrainement, communément désignée sous l'appellation anglaise « PTO Power take Off» pour la pompe hydraulique 20 d'assistance et pour la pompe de gavage d'assistance 30, soit la pompe hydraulique 20 d'assistance et la pompe de gavage d'assistance 30 sont entraînées par un piquage de mouvement sur la sortie d'arbre de transmission de la transmission mécanique.

Un embrayage ou coupleur 16 est interposé entre la boite de vitesse 12 d'une part, et la pompe hydraulique 20 d'assistance et la pompe de gavage d'assistance 30 d'autre part, de manière à piloter l'entrainement de la pompe hydraulique 20 d'assistance et de la pompe de gavage d'assistance 30 par le moteur primaire M. L'embrayage 16 (ou coupleur) tel que représenté est un embrayage à commande hydraulique ; on comprend cependant que tout type d'embrayage et de commande d'embrayage peut être employé, notamment un embrayage à disques ou un crabot, avec une commande du type hydraulique, électrique ou pneumatique.

La pompe hydraulique 20 d'assistance est reliée à un ou plusieurs moteurs hydrauliques via un circuit d'assistance. La pompe hydraulique 20 est typiquement une pompe à cylindrée fixe, qui est plus simple.

Dans l'exemple représenté sur la figure 1, la pompe hydraulique 20 d'assistance est reliée à un moteur hydraulique 40 via une ligne haute basse pression HP et une ligne basse pression BP formant le circuit d'assistance. Les dénominations haute pression et basse pression sont définies arbitrairement pour un sens d'entrainement donné de la pompe hydraulique 20 et correspondent respectivement à la ligne reliée au refoulement de la pompe hydraulique 20 et à la ligne reliée à l'admission de la pompe hydraulique 20 pour un sens d'entrainement donné. On comprend cependant bien qu'elles ne sont pas limitatives, les différents moteurs et pompes hydrauliques étant réversibles.

On comprend ainsi que lorsque le véhicule est en fonctionnement, le moteur primaire M est en fonctionnement et entraine l'arbre 10 en rotation. L'assistance hydraulique réalisée notamment via la pompe hydraulique 20 et le moteur hydraulique 40 n'est alors engagée que lorsque l'embrayage 16 est engagé. Le moteur 40 est typiquement un moteur à pistons radiaux et came multilobe, du type ou la partie motrice se désengage de l'arbre d'entrainement lorsque les lignes haute pression HP et basse pression BP ne sont plus alimentées. Ce moteur peut être soit du type qui désengage le bloc cylindres de l'arbre et garde les pistons au contact de la came par des ressorts, soit du type qui désengage le bloc cylindres de la came en rétractant les pistons dans le bloc cylindres. Les pistons peuvent être maintenus par des ressorts de rappel. En variante non représentée, les pistons peuvent être maintenus rétractés par une pression de carter.

Comme indiqué en préambule, même lorsque l'assistance hydraulique n'est pas activée, on réalise un gavage que l'on qualifie « de veille » du circuit d'assistance, afin d'assurer notamment la lubrification des différents composants, la mise sous pression des carters, la lubrification et le refroidissement des différents composants, et de permettre d'obtenir une pression de pilotage pour les composants à commande hydraulique.

Afin de réaliser une telle fonction, le système comprend une pompe de gavage de veille 50. Dans le mode de réalisation représenté sur la figure 1, la pompe de gavage de veille 50 est une pompe hydraulique couplée au moteur primaire M, indépendamment de la boite de vitesse 12 et de l'embrayage 16. Ainsi, la pompe de gavage de veille 50 est entraînée en rotation par le moteur primaire M et délivre un débit de gavage dès lors que le moteur primaire M est en fonctionnement.

La figure 2 représente une variante dans laquelle la pompe de gavage de veille 50 est une pompe électrique, entraînée par un moteur électrique 15 indépendant du moteur primaire M. Un tel mode de réalisation est notamment avantageux dans le cas où l'embrayage 16 est à commande électrique. Le moteur électrique 15 est typiquement piloté par un calculateur 14, notamment en fonction de l'état de l'embrayage 16, qui peut alors également être à commande électrique. Dans une telle variante, la pompe de gavage de veille 50 est associée à un clapet anti retour 52 afin de l'isoler de la pompe de gavage d'assistance 30.

La pompe de gavage de veille 50 est reliée d'une part à un réservoir R, et d'autre part au circuit d'assistance via un circuit de gavage 60, comprenant un clapet anti-retour taré 62 configuré de manière à permettre un passage de fluide depuis la pompe de gavage de veille 50 vers le circuit d'assistance hydraulique lorsque la pression de gavage délivrée par la pompe de gavage de veille 50 dépasse une valeur seuil. Le clapet anti retour taré 62 est ensuite relié à la ligne haute pression HP via un clapet anti retour 64 et via un limiteur de pression 65 montés en parallèle, et également à la ligne basse pression BP via un clapet anti retour 66 et un limiteur de pression 67. Le clapet anti retour taré 62 est également relié à un réservoir R, typiquement à pression ambiante, via un clapet de décharge 68, typiquement un limiteur de pression configuré de manière à permettre à un passage de fluide vers le réservoir R lorsque la pression au niveau du clapet anti-retour taré 62 est supérieure ou égale à une valeur seuil de décharge. Une telle structure de circuit de gavage est connue, et permet d'assurer un gavage dans la ligne haute pression HP et dans la ligne basse pression BP du circuit d'assistance, tout en permettant d'évacuer une surpression dans le circuit hydraulique.

La pompe de gavage de veille (50) permet aussi de créer une pression de pilotage hydraulique, qu'on peut utiliser pour piloter l'embrayage 16. Pour cela une valve directionnelle peut prélever de l'huile en sortie de la pompe de gavage de veille 50 et l'envoyer sur le vérin de commande de l'embrayage 16, et alternativement relier le vérin de commande de l'embrayage au réservoir R. La valve directionnelle peut être du type à 3 voies et 2 positions. Elle peut être pilotée par l'utilisateur. Elle peut être électrohydraulique et commandée par une unité de contrôle électronique (ou ECU) qui détermine quand l'assistance hydraulique doit être engagée ou non et qui pilote l'assistance hydraulique. Ce mode de réalisation est représenté sur la figure 1 ; un calculateur 14 (ou unité de commande électronique « ECU » selon l'acronyme communément utilisé en langue anglaise) pilote une valve à commande électrique 18 pour sélectivement relier la commande hydraulique de l'embrayage 16 à la pompe de gavage de veille 50 ou à un réservoir R à pression ambiante, pilotant ainsi l'engagement ou le désengagement de l'embrayage 16.

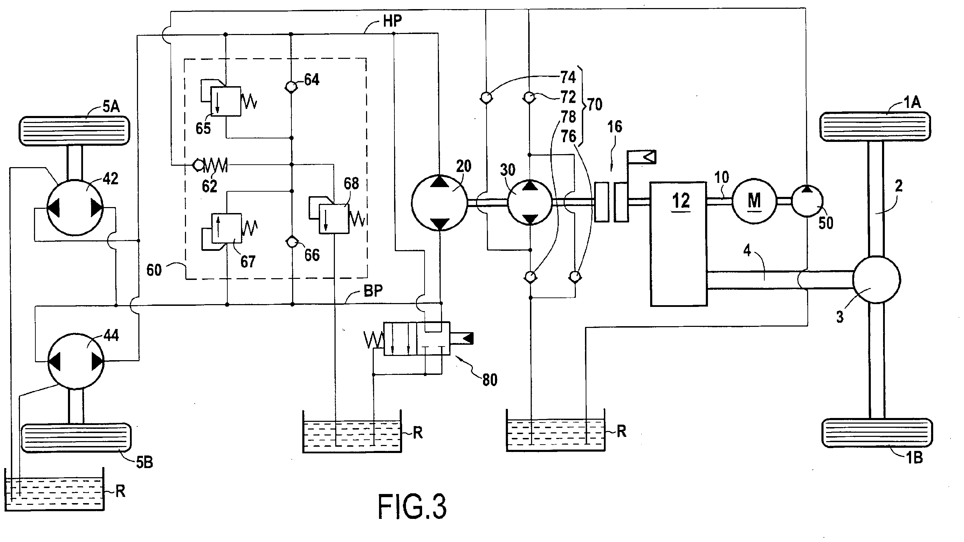

La pompe de gavage de veille (50) peut aussi être utilisée pour créer une pression de carter pour rétracter des pistons du moteur hydraulique 40 (ou le cas échéant des moteurs hydrauliques, comme par exemple dans le mode de réalisation représenté sur la figure 3). Pour cela une valve directionnelle peut prélever de l'huile en sortie de la pompe 50 et l'envoyer sur les carters du moteur hydraulique 40, et alternativement relier le carter au réservoir R. La valve directionnelle peut être du type à 3 voies et 2 positions. Elle peut être pilotée par l'utilisateur. Elle peut être électrohydraulique et commandée par une ECU qui détermine quand l'assistance doit être engagée ou non et qui pilote l'assistance.

La pompe de gavage de veille 50 a l'avantage d'être permanente et peut être utilisée comme pression de pilotage pour tout autre organe hydraulique présent sur le véhicule, par exemple des accessoires hydrauliques, et également comme pression de gavage d'autres circuits hydrauliques.

On comprend cependant que les besoins de gavage ne sont pas les mêmes selon que l'assistance hydraulique est engagée ou non. En effet, en plus des fonctions de lubrification, refroidissement mise sous pression des carters et obtention d'une pression de pilotage déjà mentionnées, lors du fonctionnement de l'assistance hydraulique, la fonction de gavage doit également compenser les pertes du système et assurer une pression suffisante pour éviter l'apparition de phénomènes de cavitation. La fonction de gavage doit également fournir un débit important de manière à pouvoir avoir un débit d'échange important, et donc une bonne stabilité température du système d'assistance.

La pompe de gavage de veille 50 est typiquement configurée de manière à délivrer un débit significativement inférieur au débit délivré par la pompe de gavage d'assistance 30, ce qui permet ainsi d'assurer un refroidissement suffisant à vitesse élevée, et de limiter la puissance consommée à vitesse réduite.

La pompe de gavage d'assistance 30 permet de réaliser cette fonction de gavage du circuit hydraulique lorsque l'assistance hydraulique est engagée. La pompe de gavage d'assistance 30 est également reliée au circuit d'assistance hydraulique via le circuit de gavage 60, et vient ainsi délivrer un débit de gavage s'ajoutant au débit délivré par la pompe de gavage de veille 50 lorsque l'embrayage 16 est engagé.

On comprend ainsi à la lecture de ce qui précède que le circuit proposé permet de minimiser la puissance requise pour l'entrainement de la pompe de gavage de veille 50, la puissance complémentaire requise pour le gavage lorsque l'assistance hydraulique est activée étant délivrée par la pompe de gavage d'assistance 30.

Le circuit tel que proposé permet ainsi de minimiser la puissance consommée par les éléments assurant la fonction de gavage lorsque l'assistance hydraulique n'est pas engagée. En effet, la cylindrée de la pompe requise pour le gavage de veille est typiquement nettement inférieure à la cylindrée requise pour la réalisation du gavage lorsque l'assistance hydraulique est en fonctionnement. A titre d'exemple, en considérant une pompe de gavage d'assistance 30 ayant une cylindrée de 20 cm³, une pompe de gavage de veille 50 ayant une cylindrée de l'ordre de 5 cm³ peut être suffisante, ce qui réduit ainsi considérablement la puissance consommée lorsque l'assistance hydraulique n'est pas activée.

Comme indiqué précédemment, la pompe de gavage d'assistance 30 est entraînée en rotation par le moteur primaire M via la boite de vitesse 12 et l'embrayage 16. On comprend dont qu'en fonction du rapport engagé pour la boite de vitesse 12, le sens et la vitesse d'entrainement de la pompe de gavage d'assistance 30 peut varier.

Or, on comprend qu'une inversion du sens d'entrainement de la pompe de gavage d'assistance 30 ne permet pas d'assurer la fonction de gavage en fonctionnement.

Afin de répondre à cette problématique, le circuit proposé comprend un circuit d'orientation de gavage 70 de la pompe de gavage d'assistance 30.

Le circuit d'orientation de gavage 70 comprend un ensemble de clapets anti retour reliant la pompe de gavage d'assistance au circuit de gavage 60 et au réservoir R. Plus précisément, le circuit d'orientation de gavage 70 comprend deux clapets anti retour 72 et 74 reliant l'admission et le refoulement de la pompe de gavage d'assistance 30 au circuit de gavage 60, de manière à ne permettre un passage de fluide que depuis l'admission et le refoulement de la pompe de gavage d'assistance 30 vers le circuit de gavage 60. L'orifice et le refoulement de la pompe de gavage d'assistance 30 sont également chacun reliés au réservoir R via deux clapets anti retour 76 et 78 permettant un passage de fluide uniquement depuis le réservoir R vers la pompe de gavage d'assistance 30. On définit ainsi pour le circuit d'orientation de gavage 70 une branche primaire reliée à un orifice (par exemple l'admission) de la pompe de gavage d'assistance 30, et une branche secondaire reliée à un autre orifice (par exemple le refoulement) de la pompe de gavage d'assistance, la branche primaire et la branche secondaire étant chacune reliée au réservoir R et au circuit de gavage via des clapets anti retour assurant un unique sens de circulation du fluide, depuis le réservoir R vers la pompe de gavage d'assistance 30, et depuis la pompe de gavage d'assistance 30 vers le circuit de gavage 60.

Ainsi, quel que soit le sens de rotation de la pompe de gavage d'assistance 30, le fluide est prélevé dans le réservoir R et injecté dans le circuit de gavage 60.

La figure 3 représente une variante du circuit représenté sur la figure 1.

Les éléments en commun avec la figure 1 ne seront pas ici décrits à nouveau en détail ; seuls les éléments spécifiques à cette variante seront ici décrits en détail.

On note par ailleurs qu'une variante équivalente peut être réalisée pour le circuit représenté sur la figure 2.

Dans la variante représentée, le circuit d'assistance comprend deux moteurs hydrauliques 42 et 44 montés en parallèle, et tous deux alimentés par la pompe hydraulique d'assistance 20. Ces deux moteurs hydrauliques 42 et 44 entraînent typiquement chacun un axe distinct, et peuvent par exemple réaliser l'entrainement de deux roues avant ou arrière d'un véhicule.

Le circuit tel que présenté comprend en outre un distributeur de purge 80, comprenant un orifice relié à la ligne haute pression HP, un orifice relié à la ligne basse pression BP, et deux orifices reliés au réservoir R. Le distributeur de purge 80 est piloté de manière à sélectivement relier la ligne haute pression HP à la ligne basse pression BP, ou relier la ligne haute pression HP et la ligne basse pression BP au réservoir R. Ces différentes configurations permettent ainsi de réaliser un fonctionnement normal du circuit hydraulique d'assistance, une mise en court-circuit des moteurs hydrauliques 42 et 44, et une purge du circuit hydraulique d'assistance.

On représente également schématiquement sur la figure 3 la transmission mécanique des roues motrices 1A et 1B d'un véhicule montées sur un essieu 2 muni d'un différentiel 3 et relié à la boite de vitesse 12 par un essieu mécanique 4, ainsi que les roues porteuses 5A et 5B qui peuvent être entraînées par les moteurs hydrauliques respectivement 42 et 44 lorsque l'assistance hydraulique est engagée.

On note que les moyens de pilotage illustrés sur les figures pour le distributeur de purge 80 et pour l'embrayage 16 ne sont pas limitatif. Dans les différents modes de réalisation, ces éléments peuvent être pilotés par des interfaces électriques, hydrauliques, ou pneumatiques, suivant la pratique habituelle du constructeur du véhicule qui reçoit la transmission hydraulique telle que présentée.

Les circuits proposés trouvent une application notamment pour la réalisation d'une assistance hydraulique d'un véhicule tel qu'un camion, ou plus généralement un véhicule destiné à recevoir un attelage ou une remorque. Ils peuvent également être appliqués pour des véhicules ayant un essieu entraîné en rotation par un moteur principal (qui peut être le moteur primaire), et un essieu pouvant être entraîné par l'assistance hydraulique lorsque l'utilisateur le souhaite ou en fonction de conditions de conduite, passant ainsi d'une transmission 2 roues motrices à une transmission à 4 roues motrices.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Transmission hydraulique comprenant :
- une pompe hydraulique (20) reliée à au moins un moteur hydraulique (40) via un circuit d'assistance hydraulique,
- un moteur primaire (M) associé à un embrayage (16) de manière à réaliser un entrainement en rotation de la pompe hydraulique (20) via l'embrayage (16) lorsque l'embrayage (16) est engagé, et de manière à découpler la pompe hydraulique (20) du moteur primaire (M) lorsque l'embrayage (16) est désengagé,
la transmission hydraulique comprenant une pompe de gavage d'assistance (30), configurée de manière à être entraînée en rotation par le moteur primaire (M) lorsque l'embrayage (16) est engagé, et à être découplée du moteur primaire (M) lorsque l'embrayage (16) est désengagé,
**caractérisée en ce qu'**elle comprend en outre une pompe de gavage de veille (50), configurée de manière à pouvoir être actionnée indépendamment de la pompe de gavage d'assistance (30).

2. Transmission hydraulique selon la revendication 1, comprenant en outre une boite de vitesse (12) interposée entre le moteur primaire (M) et l'embrayage (16).

3. Transmission hydraulique selon l'une des revendications 1 ou 2, dans laquelle la pompe de gavage d'assistance (30) est reliée au circuit d'assistance hydraulique via un circuit d'orientation (70), configuré de manière à ce que le débit injecté par la pompe de gavage d'assistance (30) dans le circuit d'assistance hydraulique soit indépendant du sens d'entrainement de la pompe de gavage d'assistance (30).

4. Transmission hydraulique selon la revendication 3, dans laquelle le circuit d'orientation (70) comprend une branche primaire et une branche secondaire reliées respectivement à une admission et à un refoulement de la pompe de gavage d'assistance (30) en considérant un fonctionnement selon un sens d'entraînement,
la branche primaire et la branche secondaire sont chacune reliées au circuit d'assistance hydraulique via un clapet anti retour (72, 74) permettant un passage de fluide depuis la pompe de gavage d'assistance (30) vers le circuit d'assistance hydraulique, et
la branche primaire et la branche secondaire sont chacune reliées à un réservoir (R) via un clapet anti retour (76, 78) permettant un passage de fluide depuis le réservoir (R) vers la pompe de gavage d'assistance (30).

5. Transmission hydraulique selon l'une des revendications 1 à 4, dans laquelle la pompe de gavage de veille (50) est configurée de manière à être entraînée en rotation par le moteur primaire (M), ou est couplée à un moteur électrique indépendant du moteur primaire (M).

6. Transmission hydraulique selon l'une des revendications 1 à 5, dans laquelle la pompe de gavage d'assistance (30) délivre un débit proportionnel au débit délivré par la pompe hydraulique (20).

7. Transmission hydraulique selon l'une des revendications 1 à 6, dans laquelle la pompe de gavage de veille (50) est configurée de manière à réaliser un pilotage de l'embrayage (16) via une commande hydraulique.

8. Transmission hydraulique selon l'une des revendications 1 à 7, dans laquelle
le moteur hydraulique (40) comprend un bloc cylindres présentant une pluralité de logements dans lesquels coulissent des pistons, et une came multilobes positionnée autour du bloc cylindres, lesdits pistons étant configurés pour venir au contact de la came multilobes,
la pompe de gavage de veille (50) est configurée de manière à délivrer une pression dans un carter du moteur hydraulique (40), de manière à rétracter des pistons du moteur hydrauliques (40) dans leurs logements respectifs et les désengager de la came multilobes.

9. Transmission hydraulique selon l'une des revendications 1 à 8, comprenant en outre un distributeur de purge (80) configuré pour sélectivement alterner entre 2 configurations :
- une première configuration dans laquelle le distributeur de purge (80) relie une admission et un refoulement de la pompe hydraulique d'assistance (20) à un réservoir à pression ambiante,
- une deuxième configuration dans laquelle le distributeur de purge (80) relie l'admission de la pompe hydraulique d'assistance (20) à son refoulement.

10. Véhicule comprenant une transmission hydraulique selon l'une des revendications 1 à 9.

## Patentansprüche

1. Hydraulikgetriebe, umfassend:
- eine Hydraulikpumpe (20), die mittels eines Hydraulikhilfskreislaufs mit mindestens einem Hydraulikmotor (40) verbunden ist,
- einen Hauptmotor (M), der mit einer Kupplung (16) verknüpft ist, um einen Drehantrieb der Hydraulikpumpe (20) mittels der Kupplung (16) durchzuführen, wenn die Kupplung (16) eingekuppelt ist, und um die Hydraulikpumpe (20) von dem Hauptmotor (M) abzukoppeln, wenn die Kupplung (16) ausgekuppelt ist,
wobei das Hydraulikgetriebe eine Hilfsförderpumpe (30) umfasst, die dazu ausgestaltet ist, von dem Hauptmotor (M) drehangetrieben zu werden, wenn die Kupplung (16) eingekuppelt ist, und von dem Hauptmotor (M) abgekoppelt zu werden, wenn die Kupplung (16) ausgekuppelt ist,
**dadurch gekennzeichnet, dass** es ferner eine Vorförderpumpe (50) umfasst, die dazu ausgestaltet ist, unabhängig von der Hilfsförderpumpe (30) betätigt werden zu können.

2. Hydraulikgetriebe nach Anspruch 1, ferner umfassend ein Schaltgetriebe (12), das zwischen dem Hauptmotor (M) und der Kupplung (16) eingeschoben ist.

3. Hydraulikgetriebe nach einem der Ansprüche 1 oder 2, wobei die Hilfsförderpumpe (30) mittels eines Ausrichtungskreislaufs (70) mit dem Hydraulikhilfskreislauf verbunden ist, die dazu ausgestaltet ist, dass die von der Hilfsförderpumpe (30) in den Hydraulikhilfskreislauf eingespritzte Fördermenge von der Antriebsrichtung der Hilfsförderpumpe (30) unabhängig ist.

4. Hydraulikgetriebe nach Anspruch 3, wobei der Ausrichtungskreislauf (70) einen Hauptarm und einen Nebenarm umfasst, die jeweils mit einem Einlass und mit einem Auslass der Hilfsförderpumpe (30) unter Berücksichtigung eines Betriebs gemäß einer Antriebsrichtung verbunden sind,
der Hauptarm und der Nebenarm jeweils mittels eines Rückschlagventils (72, 74) mit dem Hydraulikhilfskreislauf verbunden sind, das einen Flüssigkeitsdurchtritt von der Hilfsförderpumpe (30) zu dem Hydraulikhilfskreislauf zulässt, und
der Hauptarm und der Nebenarm jeweils mittels eines Rückschlagventils (76, 78) mit einem Reservoir (R) verbunden sind, das einen Flüssigkeitsdurchtritt von dem Reservoir (R) zu der Hilfsförderpumpe (30) zulässt.

5. Hydraulikgetriebe nach einem der Ansprüche 1 bis 4, wobei die Vorförderpumpe (50) dazu ausgestaltet ist, von dem Hauptmotor (M) drehangetrieben zu werden, oder an einen Elektromotor gekoppelt ist, der von dem Hauptmotor (M) unabhängig ist.

6. Hydraulikgetriebe nach einem der Ansprüche 1 bis 5, wobei die Hilfsförderpumpe (30) eine Fördermenge abgibt, die proportional zu der Fördermenge ist, die von der Hydraulikpumpe (20) abgegeben wird.

7. Hydraulikgetriebe nach einem der Ansprüche 1 bis 6, wobei die Vorförderpumpe (50) dazu ausgestaltet ist, eine Regelung der Kupplung (16) mittels einer Hydrauliksteuerung durchzuführen.

8. Hydraulikgetriebe nach einem der Ansprüche 1 bis 7, wobei
der Hydraulikmotor (40) einen Zylinderblock, der mehrere Aufnahmen aufweist, in denen Kolben gleiten, und einen Mehrflächennocken, der um den Zylinderblock positioniert ist, umfasst, wobei die Kolben dazu ausgestaltet sind, mit dem Mehrflächennocken in Kontakt zu kommen,
die Vorförderpumpe (50) dazu ausgestaltet ist, einen Druck in ein Gehäuse des Hydraulikmotors (40) abzugeben, um Kolben des Hydraulikmotors (40) in ihren jeweiligen Aufnahmen zurückzuziehen und sie von dem Mehrflächennocken auszukuppeln.

9. Hydraulikgetriebe nach einem der Ansprüche 1 bis 8, ferner umfassend einen Entlüftungsverteiler (80), der dazu ausgestaltet ist, selektiv zwischen 2 Ausgestaltungen zu alternieren:
- einer ersten Ausgestaltung, in welcher der Entlüftungsverteiler (80) einen Einlass und einen Auslass der Hilfshydraulikpumpe (20) mit einem Reservoir bei Umgebungsdruck verbindet,
- einer zweiten Ausgestaltung, in welcher der Entlüftungsverteiler (80) den Einlass der Hilfshydraulikpumpe (20) mit ihrem Auslass verbindet.

10. Fahrzeug, umfassend ein Hydraulikgetriebe nach einem der Ansprüche 1 bis 9.

## Claims

1. A hydraulic transmission comprising:
- a hydraulic pump (20) connected to at least one hydraulic motor (40) via a hydraulic assistance circuit,
- a primary motor (M) associated with a clutch (16) so as to drive in rotation the hydraulic pump (20) via the clutch (16) when the clutch (16) is engaged, and so as to decouple the hydraulic pump (20) from the primary motor (M) when the clutch (16) is disengaged,
the hydraulic transmission comprising an assistance booster pump (30), configured so as to be driven in rotation by the primary motor (M) when the clutch (16) is engaged, and to be decoupled from the primary motor (M) when the clutch (16) is disengaged,
**characterized in that** it further comprises a standby booster pump (50), configured so as to be able to be actuated independently of the assistance booster pump (30).

2. The hydraulic transmission according to claim 1, further comprising a gearbox (12) interposed between the primary motor (M) and the clutch (16).

3. The hydraulic transmission according to any of claims 1 or 2, wherein the assistance booster pump (30) is connected to the hydraulic assistance circuit via an orientation circuit (70), configured such that the flow rate injected by the assistance booster pump (30) into the hydraulic assistance circuit is independent of the driving direction of the assistance booster pump (30).

4. The hydraulic transmission according to claim 3, wherein the orientation circuit (70) comprises a primary branch and a secondary branch connected respectively to an intake and to a discharge of the assistance booster pump (30) while considering an operation according to a driving direction,
the primary branch and the secondary branch are each connected to the hydraulic assistance circuit via a check valve (72, 74) allowing a passage of fluid from the assistance booster pump (30) to the hydraulic assistance circuit, and
the primary branch and the secondary branch are each connected to a tank (R) via a check valve (76, 78) allowing a passage of fluid from the tank (R) to the assistance booster pump (30).

5. The hydraulic transmission according to any of claims 1 to 4, wherein the standby booster pump (50) is configured so as to be driven in rotation by the primary motor (M), or is coupled to an electric motor independent of the primary motor (M).

6. The hydraulic transmission according to any of claims 1 to 5, wherein the assistance booster pump (30) delivers a flow rate proportional to the flow rate delivered by the hydraulic pump (20).

7. The hydraulic transmission according to any of claims 1 to 6, wherein the standby booster pump (50) is configured so as to pilot the clutch (16) via a hydraulic control.

8. The hydraulic transmission according to any of claims 1 to 7, wherein
the hydraulic motor (40) comprises a cylinder block having a plurality of housings in which pistons slide, and a multi-lobe cam positioned around the cylinder block, said pistons being configured to come into contact with the multi-lobe cam,
the standby booster pump (50) is configured so as to deliver pressure in a casing of the hydraulic motor (40), so as to retract pistons of the hydraulic motor (40) into their respective housings and disengage them from the multilobe cam.

9. The hydraulic transmission according to any of claims 1 to 8, further comprising a bleed distributor (80) configured to selectively alternate between 2 configurations:
- a first configuration in which the bleed distributor (80) connects an intake and a discharge of the assistance hydraulic pump (20) to a tank at ambient pressure,
- a second configuration in which the bleed distributor (80) connects the intake of the assistance hydraulic pump (20) to its discharge.

10. A vehicle comprising a hydraulic transmission according to any of claims 1 to 9.
